# EUROPÄISCHE PATENTSCHRIFT

(11) **EP 2 885 441 B1**
(45) Veröffentlichungstag und Bekanntmachung des Hinweises auf die Patenterteilung: **16.08.2017**
(21) Anmeldenummer: 13766254.0
(22) Anmeldetag: 17.09.2013
(51) Int. Cl.: C23C 24/04, B23K 26/386, B23K 26/00, B23K 26/364

(54) **VERFAHREN ZUM BESCHICHTEN DURCH THERMISCHES SPRITZEN MIT GENEIGTEM PARTIKELSTRAHL**
METHOD FOR COATING BY THERMAL SPRAYING WITH AN INCLINED PARTICLE JET
PROCÉDÉ DE REVÊTEMENT PAR PULVÉRISATION THERMIQUE AU MOYEN D'UN JET DE PARTICULES INCLINÉ

(30) Priorität: 28.09.2012 DE 102012217685
(43) Veröffentlichungstag der Anmeldung: 24.06.2015
(73) Patentinhaber: Siemens Aktiengesellschaft, 80333 München (DE)
(72) Erfinder: REICHE, Ralph, 13465 Berlin (DE); STIER, Oliver, 12163 Berlin (DE)
(86) Internationale Anmeldenummer: PCT/EP2013/069218
(87) Internationale Veröffentlichungsnummer: WO 2014/048790

(56) Entgegenhaltungen:
- WO-A1-2011/088817
- DE-A1-102006 004 769
- DE-A1-102007 023 418
- DE-A1-102010 053 327
- KUMAR S ET AL: "Deposition characteristics of copper particles on roughened substrates through kinetic spraying", APPLIED SURFACE SCIENCE, ELSEVIER, AMSTERDAM, NL, Bd. 255, Nr. 6, 1. Januar 2009 (2009-01-01), Seiten 3472-3479, XP025865628, ISSN: 0169-4332, DOI: 10.1016/J.APSUSC.2008.10.060 [gefunden am 2008-10-25]
- LI G ET AL: "Effect of different incidence angles on bonding performance in cold spraying", TRANSACTIONS OF NONFERROUS METALS SOCIETY OF CHINA, NONFERROUS METALS SOCIETY OF CHINA, CN, Bd. 17, Nr. 1, 1. Januar 2007 (2007-01-01) , Seiten 116-121, XP022935581, ISSN: 1003-6326, DOI: 10.1016/S1003-6326(07)60058-2 [gefunden am 2007-01-01]

## Beschreibung

Die Erfindung betrifft ein Verfahren zum Beschichten durch thermisches Spritzen. Bei diesem wird ein Partikelstrahl auf ein zu beschichtendes Substrat gerichtet und die Partikel des Partikelstrahls auf dem Substrat abgeschieden. Dabei ist die Achse des Partikelstrahls zur Oberflächennormalen des unbehandelten Substrates unter Ausbildung eines Spritzwinkels α geneigt.

Aus der EP 1 534 877 B1 ist es bekannt, dass die Abscheidung von Partikeln beim thermischen Spritzen dadurch verbessert werden kann, dass auf der Werkstückoberfläche, die es zu beschichten gilt, ein Laser mitgeführt wird. Dieser kann im Auftreffpunkt des Partikelstrahls eine Erwärmung des Substrates erreichen, wodurch die auftreffenden Partikel besser auf dem Substrat haften bleiben. Allerdings funktioniert diese Haftungsverbesserung nur bei nahezu senkrecht auf der Oberfläche des zu beschichtenden Substrats ausgerichteten Partikelstrahls. Bei einem solchen Partikelstrahl ist der Spritzwinkel nahe 0°. Der Spritzwinkel ist definiert durch einen nicht orientierten Winkel zwischen der Symmetrieachse des Partikelstrahls (im Folgenden kurz als Strahlachse bezeichnet) und der Oberflächennormalen im Auftreffpunkt des Partikelstrahl. Der Spritzwinkel soll im Folgenden mit α bezeichnet werden.

Normalerweise wird der Partikelstrahl mit einem Spritzwinkel α = 0° eingestellt. Jede davon abweichende Orientierung der Strahlachse führt zu einem positiven Wert des Spritzwinkels α. Abhängig von den Randbedingungen wie verarbeitete Partikel, Oberflächenmaterial und Spritzparameter gibt es ein zulässiges Intervall für den Spritzwinkel, unterhalb dessen die Haftfestigkeit der abgeschiedenen Partikel maximale Werte erreichen. Der Nullwinkel kann in diesem Intervall enthalten sein oder nicht. Die Schar aller zulässigen Spritzwinkel ergeben damit einen Raum zwischen zwei Kegelflächen, deren Spitzen im Auftreffpunkt des Partikelstrahls zusammenfallen. Wenn in dem Intervall der Nullwinkel enthalten ist, benötigt man zur Beschreibung des Spritzwinkelintervalls nur einen Kegel, der in der beschriebenen Weise ausgerichtet ist.

Gemäß der DE 10 2007 023 418 A1 ist beschrieben, dass die Haftung von mittels thermischen Spritzens abgeschiedenen Schichten dadurch verbessert werden kann, dass in die Oberfläche Formtaschen mit definierter Geometrie eingebracht werden, die bezüglich der Oberflächen Hinterschneidungen aufweisen. Diese Hinterschneidungen bewirken einen Effekt des sich Verkrallens der Schicht auf dem Substrat, wenn diese mit den im thermischen Spritzprozess erzeugten Tröpfchen des Beschichtungswerkstoffs ausgefüllt werden.

Aus S. Kumar et al., "Deposition characteristics of copper particles on roughened substrates through kinetic spraying", Applied Surface Science 255 (2009), Seiten 3472 - 3479 ist überdies bekannt, dass sich die Haftung von Schichten, die mittels Kaltgasspritzen aufgebracht warden, verbessern lässt, indem die Oberfläche angeraut wird. Es hat sich hierbei gezeigt, dass die Haftung besonders verbessert wird, wenn die Vertiefungen in der rauen Schicht kleiner als die verarbeiteten Partikel des Beschichtungspulvers sind.

Insbesondere beim Kaltgasspritzen sind optimale Ergebnisse nur in einem vergleichsweise kleinen Spritzwinkelintervall erreichbar, da bei zunehmendem Spritzwinkel α der Anteil an kinetischer Energie der Partikel in Richtung der Oberflächennormalen immer kleiner wird. Daher können bei kompliziert geformten Bauteilen bestimmte Regionen des Bauteils eventuell nicht durch das thermische Spritzen, insbesondere Kaltgasspritzen, beschichtet werden, da unter Berücksichtigung des Spritzwinkelintervalls aus geometrischen Gründen kein Partikelstrahl auf die Oberfläche gerichtet werden kann.

Das Kaltgasspritzen ist ein an sich bekanntes Verfahren, bei dem für die Beschichtung vorgesehene Partikel mittels einer konvergent-divergenten Düse vorzugsweise auf Überschallgeschwindigkeit beschleunigt werden, damit diese aufgrund ihrer eingeprägten kinetischen Energie auf der zu beschichtenden Oberfläche haften bleiben. Hierbei wird die kinetische Energie der Teilchen genutzt, welche zu einer plastischen Verformung derselben führt, wobei die Beschichtungspartikel beim Auftreffen lediglich an ihrer Oberfläche aufgeschmolzen werden. Deshalb wird dieses Verfahren im Vergleich zu anderen thermischen Spritzverfahren als Kaltgasspritzen bezeichnet, weil es bei vergleichsweise tiefen Temperaturen durchgeführt wird, bei denen die Beschichtungspartikel im Wesentlichen festbleiben. Vorzugsweise wird zum Kaltgasspritzen, welches auch als kinetisches Spritzen bezeichnet wird, eine Kaltgasspritzanlage verwendet, die eine Gasheizeinrichtung zum Erhitzen eines Gases aufweist. An die Gasheizeinrichtung wird eine Stagnationskammer angeschlossen, die ausgangsseitig mit der konvergent-divergenten Düse, vorzugsweise einer Lavaldüse verbunden wird. Konvergent-divergente Düsen weisen einen zusammenlaufenden Teilabschnitt sowie einen sich aufweitenden Teilabschnitt auf, die durch einen Düsenhals verbunden sind. Die konvergent-divergente Düse erzeugt ausgangsseitig einen Pulverstrahl in Form eines Gasstroms mit darin befindlichen Partikeln mit hoher Geschwindigkeit, vorzugsweise Überschallgeschwindigkeit.

Die Aufgabe der Erfindung besteht darin, ein Verfahren zum Beschichten durch thermisches Spritzen anzugeben, mit dem auch schwer zugängliche Regionen eines Bauteils beschichtet werden können und auch bei hohen Partikelgeschwindigkeiten, wie sie beim Kaltgasspritzen vorliegen, eine gute Haftung erzeugt werden kann.

Diese Aufgabe wird mit dem eingangs angegebenen Verfahren erfindungsgemäß dadurch gelöst, dass ein Kaltgasspritzen durchgeführt wird und vor dem Kaltgasspritzen
eine Vorbehandlung des Substrats durchgeführt wird, bei der die Oberfläche strukturiert wird. Dabei werden Strukturelemente der strukturierten Oberfläche derart schräg auf der Oberfläche hergestellt, dass die Strukturelemente der geneigten Achse des Partikelstrahls, also der Strahlachse, zugewandt sind. Eine schräge Herstellung der Strukturelemente im Sinne der Erfindung bedeutet mit anderen Worten also, dass die fertig gestellten Strukturelemente nicht senkrecht nach oben stehen, sondern deren hauptsächliche geometrische Ausrichtung von der Oberflächennormalen abweicht. Hat man als Strukturelement beispielsweise eine beliebige Erhebung, so lässt sich deren Ausrichtung beispielsweise unter Berücksichtigung der Schwerachse des Strukturelementes bestimmen. Diese ist dann nicht parallel zur Oberflächennormalen ausgerichtet, sondern bildet zu dieser einen Neigungswinkel β, wobei die schräge Ausrichtung der Strukturelemente so erfolgt, dass diese der geneigten Strahlachse zugewandt sind. Mit anderen Worten wird die genannte Scliwerachse eines Strukturelementes zumindest eine ähnliche Ausrichtung aufweisen, wie die Strahlachse.

Außerdem ist erfindungsgemäß vorgesehen, dass die räumliche Ausdehnung der Strukturelemente zumindest in der Ebene des Spritzwinkels α kleiner als der mittlere Durchmesser der Partikel ist. Als Ebene des Spritzwinkels α soll eine Ebene definiert sein, in der beide Schenkel des Spritzwinkels α liegen. Betrachtet man die räumliche Ausdehnung der Strukturelemente in dieser Ebene, so soll die Geometrie der Strukturelemente gesehen im Schnitt dieser Ebene kleiner ausfallen, als die Partikel groß sind. Es hat sich nämlich gezeigt, dass Partikel, die auf eine derart strukturierte Oberfläche auftreffen, trotz eines Spritzwinkels α einen größeren Betrag ihrer kinetischen Energie in eine Verformung umwandeln können, als Partikel, die unter demselben Spritzwinkel α auf die unstrukturierte, d. h. glatte, Oberfläche auftreffen. Mit anderen Worten setzt die zu beschichtende Oberfläche aufgrund der Geometrie der Strukturelemente zumindest in Richtung des Spritzwinkels den auftreffenden Partikeln einen größeren Haftungswiderstand entgegen. Dies bewirkt vorteilhaft, dass die Oberfläche speziell in der Richtung des Spritzwinkels α mit größeren Spritzwinkeln noch zuverlässig beschichtet werden kann. Auf diese Weise wird es beispielsweise möglich, Bauteile mit Hinterschneidungen durch thermisches Spritzen zu beschichten, weil die schwer zugänglichen Regionen des Bauteils aufgrund der Hinterschneidungen für den Spritzstrahl zugänglich werden.

Gemäß einer vorteilhaften Ausgestaltung der Erfindung ist vorgesehen, dass der Neigungswinkel β der schrägen Ausrichtung der Strukturelemente dem Spritzwinkel α im Wesentlichen entspricht. Mit anderen Worten wird der Neigungswinkel der schrägen Ausrichtung der Strukturelemente so bestimmt, dass eine optimale Verbesserung des Spritzwinkels α erreicht wird. Fertigungstechnisch ist es dabei besonders vorteilhaft, wenn die ganze schwer zugängliche Region des Bauteils mit Strukturelementen versehen wird, die zumindest im Wesentlichen dieselbe Ausrichtung aufweisen. Auch der Partikelstrahl wird zwecks Beschichtung dieser Region dann so ausgerichtet, dass dieser bei Beschichtung der Region zumindest im Wesentlichen parallel verschoben wird. Dies kann auch erreicht werden, wenn die Strahlerzeugungseinrichtung (beispielsweise die Spritzdüse einer Anlage zum Kaltgasspritzen) im Verhältnis zur zu beschichtenden Region weit von dem Substrat entfernt ist und zum Zwecke der Beschichtung dieser Region beispielsweise um plus/minus 5° geschwenkt wird. Die entstehenden Winkelversätze sind dann vergleichsweise klein.

Die aus den Strukturelementen bestehende Strukturierung der Oberfläche des Substrates kann auch als mikroskopische Riffelung bezeichnet werden. Der Bindungsmechanismus der Partikel auf der Oberfläche kann auch vereinfacht so beschrieben werden, dass sich die "Spitzen" der Riffelung beim Auftreffen der Partikel in diese hineinbohren und damit die Haftung verbessern. Dies lässt sich mit der Funktion einer Metallfeile vergleichen, die ebenfalls eine Riffelung hat. Diese Riffelung bewirkt gewöhnlich, dass die Feile in einer bestimmten Richtung über das zu bearbeitende Werkstück geführt werden muss, um einen optimalen Spanabhub zu garantieren. Dies ist nur möglich, indem die Riffelung einen Neigungswinkel der schrägen Ausrichtung der einzelnen Strukturelemente aufweist. Diese Analogie erklärt die Funktion der mikroskopischen Riffelung. Mikroskopisch im Sinne der Anmeldung bedeutet, dass die Strukturelemente, wie bereits ausgeführt, eine kleinere Ausdehnung aufweisen müssen, als die Partikel, damit die Partikel sozusagen wie das Werkstück unter der Feile agieren können.

Die Oberflächennormale des Substrates ist durch die Oberfläche des unbehandelten Substrates definiert. Dies bedeutet, dass nach Behandlung des Substrates durch Erzeugen der Strukturelemente lokal andere Oberflächennormalen entstehen können. Allerdings geht es um die Oberflächennormalen, die aufgrund der übergeordneten Struktur des Substrates zu bestimmen sind. Die im Vergleich hierzu klein ausfallende Strukturierung erzeugt somit eine Oberfläche, die viel feiner strukturiert ist, so dass die Oberflächennormale nach Strukturierung des Substrates nur noch durch Mittlung über mehrere Strukturelemente hinweg ermittelt werden könnte.

Gemäß einer weiteren Ausgestaltung der Erfindung ist vorgesehen, dass die Ebene des Spritzwinkels α und die Ebene der Neigungswinkel β der schrägen Ausrichtungen der Strukturelemente in einem Winkel γ von höchstens 25° zueinander liegen. Hierbei spielen fertigungstechnische Gesichtspunkte eine Rolle. Einerseits gibt es bei der Fertigung der Strukturelemente fertigungsbedingte Toleranzen. Außerdem kann die Geometrie des zu beschichtenden Substrates so ausgebildet sein, dass eine ideale Ausrichtung der Strukturelemente, d. h. eine Ausrichtung mit einem Winkel γ von 0°, zu einem erhöhten Fertigungsaufwand führen würde. In diesem Fall kann eine Ausrichtung der Strukturelemente gewählt werden, welche in Teilen der schwer zu beschichtenden Region des Bauteils mehr oder weniger, jedoch höchstens um 25° von der idealen Ausrichtung abweicht. Besonders bevorzugt kann für den Winkel γ auch eine Höchstgrenze von 15° oder 10° festgelegt werden. Dies ist dann von Vorteil, wenn aufgrund der verarbeiteten Partikel, des gewählten thermischen Beschichtungsverfahrens oder des Substratwerkstoffes eine engere Tolerierung des Winkels γ notwendig ist, um die geforderten Beschichtungsergebnisse noch zu erzielen.

Besonders vorteilhaft ist es, wenn als Strukturelement Gräben hergestellt werden. Diese Gräben lassen sich fertigungstechnisch vorteilhaft besonders einfach herstellen. Diese können beispielsweise mittels eines Lasers hergestellt werden, indem dieser über die Werkstückoberfläche bewegt wird. Dabei können die Gräben parallel zueinander verlaufen, um den zur Verfügung stehenden Flächenbereich des Substrates optimal zu nutzen. Abhängig von der Geometrie des zu beschichtenden Substrates können die Gräben gerade verlaufen oder gekrümmten Linien folgen. Letzteres ist auch zur Optimierung des Winkels γ von Bedeutung.

Besonders vorteilhaft weisen die Gräben zumindest lokal Symmetrieebenen auf, die bei der Herstellung derart schräg ausgerichtet werden, dass sie der geneigten Achse des Partikelstrahls beim thermischen Spritzen zugewandt sind. Hierdurch entsteht sozusagen die geforderte Ausrichtung zum Partikelstrahl hin. Zu bemerken ist hierbei, dass nicht nur die Gräben, sondern insbesondere die zwischen den Gräben stehenbleibenden Grate für den zustande kommenden Effekt einer Haftungsverbesserung verantwortlich sind. Die Strukturierung der Oberfläche wird also nicht nur die hergestellten Gräben, sondern auch durch die sich zwischen diesen befindenden Strukturelemente in Form von Graten beeinflusst.

Eine andere vorteilhafte Möglichkeit sieht vor, dass die Strukturelemente als Löcher hergestellt werden. Auch Löcher können vorteilhaft mit geringem Aufwand hergestellt werden. Diese können beispielsweise durch punktuelles Beschießen der zu beschichtenden Oberfläche des Substrates mit einem Laser hergestellt werden. Vorteilhaft weisen diese Löcher Symmetrieachsen auf, die bei der Herstellung derart schräg ausgerichtet werden, dass sie den geneigten Achsen des Partikelstrahls beim thermischen Spritzen zugewandt sind. Die Symmetrieachsen der Löcher stellen somit gleichzeitig die Schwerachsen der Löcher dar, wobei diese insbesondere bei Verwendung eines Lasers direkt durch dessen Ausrichtung beeinflusst werden können. Dies gilt im Übrigen auch für die Herstellung von Gräben mittels des Lasers. Auch bei der Herstellung von Löchern ist zu erwähnen, dass die zwischen den Löchern verbleibenden Stege ebenfalls gerichtete Strukturen ausbilden, welche als Strukturelemente an der Haftungsverbesserung der Oberfläche beteiligt sind.

Besonders vorteilhaft ist es, wenn als thermisches Spritzen das Kaltgasspritzen angewendet wird. Dieses eignet sich vorteilhaft gut, um verhältnismäßig kostengünstig Schichten größerer Schichtdicke herzustellen. Insbesondere, wenn die Schicht mehrlagig hergestellt wird, d. h. ein Beschichten durch mehrmaliges Abwechseln des Herstellens von Strukturelementen und des Herstellens von Lagen der gewünschten Beschichtung erfolgt, können größere Schichtdicken realisiert werden. Die abgeschiedenen Lagen dienen jeweils erneut zur Herstellung der nächsten Lage, wobei bei schwer zugänglichen Regionen des Substrates selbstverständlich immer erneut die Lage wieder als zu beschichtende Oberfläche in der erfindungsgemäßen Weise strukturiert werden muss. Ansonsten würden nachfolgende Lagen auf den vorhergehenden nicht haften bleiben.

Um Werkstücke mit Regionen schwerer Zugänglichkeit beschichten zu können, ist es vorteilhaft, wenn das Substrat in den Regionen, die für den Partikelstrahl unter Beachtung der maximal zulässigen Spritzwinkel beim unbehandelten Substrat unzugänglich sind, derart hergestellt werden, dass eine damit verbundene Vergrößerung des zulässigen Spritzwinkels α dazu führt, dass die Region mit dem thermischen Spritzverfahren beschichtet werden kann. Dies ist der Fall, wenn der maximal zulässige Spritzwinkel α sich gerade in die Richtung vergrößert, von wo der Partikelstrahl aufgrund der geometrischen Vorgaben des zu beschichtenden Substrates herkommt.

Die Strukturelemente können vorteilhaft mit einem Laserstrahl, durch ein Erodierverfahren, spanabhebend, durch ein Umformverfahren oder chemisch erzeugt werden, je nachdem welches Verfahren sich für das betreffende Substrat am besten eignet.

Wird beispielsweise die Oberflächenstrukturierung durch ein Erodierprozess durchgeführt, wird die Struktur von einer Erodierelektrode auf die zu beschichtende Oberfläche kopiert. Hierzu ist es notwendig, die Elektrode vor dem Kopieren mit der gewünschten Struktur zu versehen. Die zu beschichtende Oberfläche des Substrates kann dann durch den Einsatz einer einzigen oder mehrerer Elektroden strukturiert werden. Falls mehrere Elektroden verwendet werden, können diese verschiedene Gestalten haben, um verschiedene Regionen der Oberfläche des Substrates mit optimalem Abstand behandeln zu können.

Eine besonders vielseitig nutzbare Erodierelektrode hat beispielsweise die Form eines länglichen Rotationsellipsoids (gleichend einer Zigarre oder eines Zylinders), dessen Oberfläche entlang der Längenausdehnung der Elektrode umlaufend geriffelt ist. Diese Riffelfurchen können dann durch Anschmiegen der Werkstückoberfläche an das Erodierwerkzeug abgebildet werden, wobei die Längsachse des Erodierwerkzeugs parallel zur Richtung der kleinsten Krümmung der Werkstückoberfläche im Berührungspunkt des Erodierwerkzeugs orientiert ist. Dann kann das Erodierwerkzeug senkrecht zur Längsachse über die Oberfläche des Substrates geführt werden. Auf diese Weise ist eine verhältnismäßig effektive Strukturierung der Oberfläche möglich.

Wird zur Strukturierung ein Laser-Bearbeitungsprozess gewählt, so kann der Laser unter Berücksichtigung der Zugänglichkeit des Werkstückes und von dessen geometrischen Gestalt geführt werden. Dies ist insbesondere unter Heranziehung von CAD-Daten des Substrates möglich. Die Verwendung eines Lasers hat den Vorteil, dass dieser ähnlich wie der Partikelstrahl eine Achse besitzt, so dass dieser genauso geführt werden kann wie später Partikelstrahl. Das heißt, wenn sowohl die Strahlerzeugungseinrichtung (beispielsweise Kaltgasspritzdüse) wie auch der Laser nach demselben Bewegungsmuster bewegt werden. So stimmt der Spritzwinkel α und der Neigungswinkel β der schrägen Ausrichtung der Strukturelemente im Wesentlichen immer überein, wodurch ein optimales Beschichtungsergebnis erreicht werden kann.

Erfindungsgemäß kann die Beschichtungsanlage sowie die Einrichtung zur Erzeugung der Strukturelemente abwechselnd oder gleichzeitig verwendet werden. Eine gleichzeitige Verwendung bewirkt vorteilhaft eine Verkürzung der Fertigungszeiten, ist aber nur bei ausreichender Zugänglichkeit der Region des Substrates möglich. Eine abwechselnde Anwendung bewirkt, dass die Herstellungszeiten sich verlängern, jedoch sind schwerer zugängliche Regionen des Substrates optimal mit einer Beschichtung zu versehen. Zur Optimierung des Fertigungsverfahrens eines bestimmten Bauteils kann auch sowohl eine gleichzeitige als auch eine abwechselnde Herstellung der Strukturelemente und der Beschichtung gewählt werden, so dass die Herstellzeiten für jedes Substrat optimiert werden können.

Ein Beispiel, für das das erfindungsgemäße Verfahren angewendet werden kann, ist die Beschichtung von sogenannten Schaufeldrillingen für Gasturbinen. Diese weisen drei Schaufeln auf, die gemeinsam hergestellt werden. Daher entstehen zwischen den Schaufeln schwer zugängliche Regionen, welche vorteilhaft mit dem erfindungsgemäßen Verfahren beschichtet werden können.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert wie sich Unterschiede zwischen den einzelnen Figuren ergeben. Es zeigen:
- Figur 1: ein Ausführungsbeispiel des erfindungsgemäßen Verfahrens in dreidimensionaler Ansicht, wobei sich die Winkel α und β ablesen lassen,
- Figur 2: eine dreidimensionale Darstellung des Substrates gemäß Figur 1, wobei sich die Winkel α und γ ablesen lassen,
- Figur 3: ein alternatives Substrat, als Ausführungsbeispiel mit Löchern,
- Figur 4: ein Ausführungsbeispiel des erfindungsgemäßen Verfahrens, bei dem ein Schaufeldrilling beschichtet wird,
- Figur 5: verschiedene Schritte eines Ausführungsbeispiels des erfindungsgemäßen Verfahrens, bei dem eine mehrlagige Schicht abgeschieden wird und
- Figur 6: die dreidimensionale grafische Darstellung des Spritzwinkelintervalls des erfindungsgemäßen Verfahrens in Form eines modifizierten Kegels.

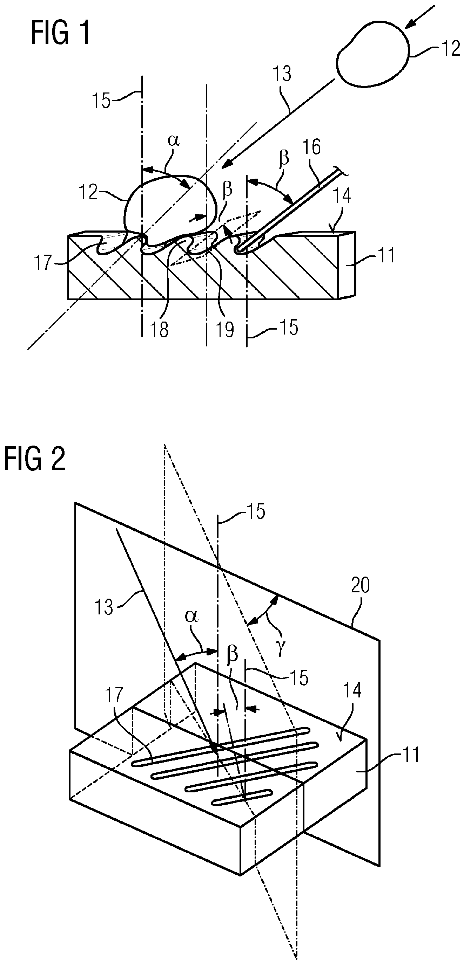

In Figur 1 ist ein Substrat 11 dargestellt, welches mit Partikeln 12 mittels Kaltgasspritzen beschichtet werden soll. Zu diesem Zweck wird ein Partikelstrahl 13 auf die Oberfläche 14 des Substrates 11 gerichtet. Der Partikelstrahl 13 ist allerdings um einen Winkel α von der Oberflächennormalen 15 geneigt. Dieser Winkel α wird Spritzwinkel genannt.

Um eine Haftung der auftreffenden Partikel 12 zu verbessern, wird erfindungsgemäß zusätzlich eine Strukturierung der Oberfläche 14 mit einem Laserstrahl 16 vorgenommen. Mit diesem werden Gräben 17 durch Laserablation erzeugt, wobei der Laserstrahl 16 in einem Neigungswinkel β auf die Oberfläche 14 des Substrates 11 auftrifft. Damit sind die Gräben 14 und die zwischen den Gräben entstehenden Grate 18 schräg ausgerichtet. Das heißt, dass diese nicht senkrecht nach oben entsprechend der Oberflächennormalen 15 abragen, sondern vielmehr die Gräben eine Symmetrieebene 19 aufweisen, die entsprechend der Ausrichtung des Laserstrahls 16 um den Neigungswinkel β geneigt sind. In Figur 1 entspricht in dem dargestellten Ausschnitt des Substrates 11 der Spritzwinkel α genau dem Neigungswinkel β. Unter diesen geometrischen Verhältnissen kann bei Spritzwinkeln α > 0 ein optimales Haftungsergebnis der Partikel 12 auf der Oberfläche 14 erreicht werden. In Figur 1 ist schematisch angedeutet, wie das Partikel 12 beim Auftreffen auf die strukturierte Oberfläche 14 dadurch verformt wird, dass sich die als Gräben 17 und dazwischen liegende Grate 18 ausgebildeten Strukturelemente in die Oberfläche des Partikels graben. Hierdurch wird die Haftungsfläche vergrößert, so dass die anschließende weitere plastische Verformung (in Figur 1 nicht dargestellt) des Partikels 12 zu einer wirksamen Verkrallung zwischen Partikel 12 und Substrat 11 führt.

In Figur 1 ist dargestellt, wie die Vorbehandlung mittels des Laserstrahls 16 und die Beschichtung mittels des Partikelstrahls 13 gleichzeitig erfolgt. Dies bedeutet allerdings, dass der Laserstrahl 16 und der Partikelstrahl 13 zwar gleichzeitig aber an unterschiedlichen Stellen der Oberfläche 14 einwirken. Alternativ ist es selbstverständlich auch möglich, die Strukturierung der Oberfläche als Vorbehandlung vor dem Beschichten in einem gesonderten Fertigungsschritt stattfinden zu lassen.

In Figur 2 ist ein anderer Ausschnitt des Substrates dargestellt. Dieser ist so gewählt, dass die Gräben 17 diagonal verlaufen. Der Neigungswinkel β und der Strahlwinkel α sind ebenfalls in Figur 2 eingezeichnet. Der Figur 2 lässt sich auch entnehmen, dass der Partikelstrahl 13 und die Oberflächennormale 15 im Auftreffpunkt des Partikelstrahls die Schenkel des Strahlwinkels α ergeben, wobei diese beiden Schenkel eine Ebene 20 definieren, die senkrecht auf der Oberfläche 14 des Substrates 11 steht. Weiterhin ist eine Ebene 21 zu erkennen, die im rechten Winkel zu den Gräben 17 steht und durch die ebenfalls eine Oberflächennormale 15 verläuft. In dieser Ebene ist der Neigungswinkel β eingezeichnet, dessen beide Schenkel in dieser Ebene 21 liegen (auch wenn die Neigung in den Gräben 17 in Figur 2 nicht zu erkennen ist).

Der Unterschied, der sich bei dem Kaltspritzverfahren gemäß Figur 1 und gemäß Figur 2 ergibt, ist, dass der Spritzwinkel α und der Neigungswinkel β in Figur 2 nicht in einer Ebene (in Figur 1 die Zeichnungsebene) liegen. Vielmehr liegen die Ebenen 20, 21 der Winkel α und β in einem Winkel γ verdreht zueinander. Da beide Ebenen 20, 21 senkrecht auf der Oberfläche 14 stehen, lässt sich der Winkel γ in der Aufsicht auf die Oberfläche 14, d. h. in Blickrichtung der Oberflächennormalen 15, messen. Der maximal mögliche Winkel γ von 25° definiert hierbei die maximal zulässige Abweichung von dem gemäß Figur 1 dargestellten Zustand, dass der Spritzwinkel α und der Neigungswinkel β in ein und derselben Ebene liegen. Trotz der Abweichung γ kann das Beschichtungsergebnis noch von der strukturierten Oberfläche 14 profitieren, da der gemäß Figur 1 wirksame Verkrallungsmechanismus des auftreffenden Partikels 12 noch wirksam ist.

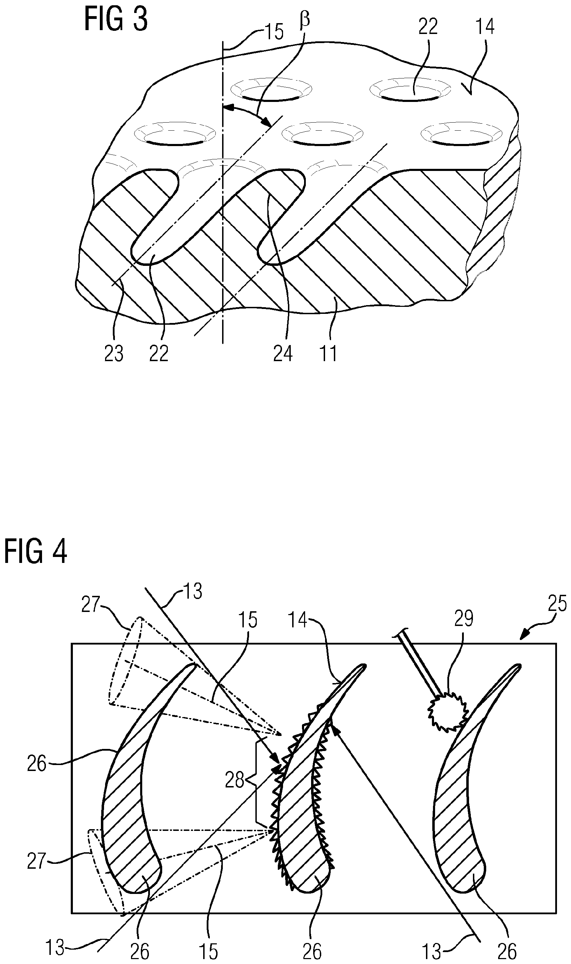

Der Hintergrund dafür, dass eine Abweichung γ zwischen den Ebenen 20, 21 zugelassen wird, ist, dass reale Bauteile eine kompliziertere Geometrie haben als die in Figur 1 und 2 dargestellten Substrate. Hier muss beispielsweise aus Gründen der Zugänglichkeit (vgl. Figur 4) von den idealen geometrischen Verhältnissen gemäß Figur 1 im zulässigen Bereich des Winkels γ abgewichen werden.

Gemäß Figur 3 ist eine dreidimensionale Darstellung eines Substrates zu erkennen, welches statt der Gräben 17 Löcher 22 aufweist, die beispielsweise mit einem nicht näher dargestellten Laserstrahl in die Oberfläche 14 des Substrates 11 geschossen werden können. Auch hierdurch ergibt sich durch Ausrichtung des Lasers ein Neigungswinkel β, wobei dieser als Schenkel die Oberflächennormale 15 und die Symmetrieachse 23 der Löcher 22 aufweist. Zwischen den Löchern 22 entsteht ein ebenfalls um den Neigungswinkel β geneigtes Gitter 24, welches ebenfalls Teil der haftungsverbessernden Strukturierung der Oberfläche 14 ist.

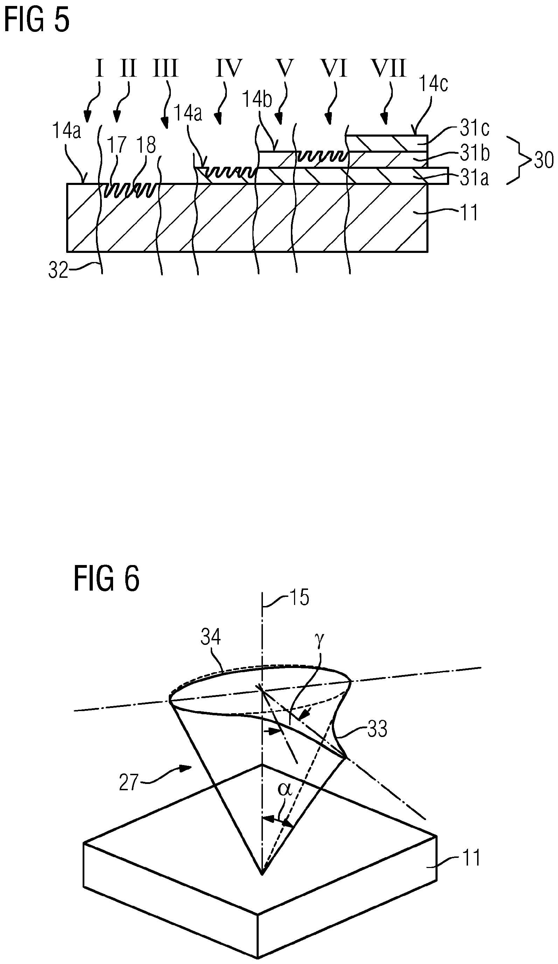

In Figur 4 ist als Substrat ein Schaufeldrilling 25 dargestellt. Dieser wird als dargestelltes einteiliges Bauteil gegossen und dann mit anderen Schaufeldrillingen zu einem Schaufelkranz für eine Gasturbine zusammengesetzt. Die Stellung von Turbinenschaufeln 26 des Schaufeldrillings zueinander bewirkt, dass beim Beschichten beispielsweise durch Kaltgasspritzen mit dem Partikelstrahl 13 unter Bedingungen gemäß dem Stand der Technik Probleme entstehen würden. Um dies zu verdeutlichen, ist das Spritzwinkelintervall gemäß dem Stand der Technik in Form eines Kegels 27 an zwei Stellen dargestellt. Unter Berücksichtigung der maximal zulässigen Spritzwinkel, die gemäß dem Stand der Technik innerhalb des Kegels liegen müssen, könnte eine Region 28 in der Mitte der Turbinenschaufel nicht beschichtet werden. Hier greift nun die erfindungsgemäße Maßnahme an. Auf der mittleren Turbinenschaufel nicht maßstabsgerecht dargestellt sind die Grate 18 und Gräben 17, die im Wesentlichen senkrecht zur größten Schaufelkrümmung der Turbinenschaufel 26 und damit auch zur Zeichnungsebene verlaufen. Diese ermöglichen, dass die eingezeichneten Partikelstrahlen 13 an der benachbarten Turbinenschaufel vorbei in die Region 28 gerichtet werden können, da sich das Spritzwinkelintervall hierdurch vergrößert (vgl. auch Figur 6). Dadurch ist eine vollständige Beschichtung der Turbinenschaufeln 26 möglich.

An einer der Schaufeln ist weiterhin ein Verfahren mittels Erodieren angedeutet, welches zur Herstellung der Oberflächenstrukturierung auf den Schaufeln dienen könnte. Hierbei handelt es sich um eine Walze, die in Figur 4 lediglich von der Stirnseite her zu erkennen ist. Die Walze ist nämlich entsprechend der herzustellenden Gräben 17 und Grate 18 senkrecht zur Zeichnungsebene und damit zur größten Krümmung der Turbinenschaufeln angeordnet. Die Walze weist ein Profil auf, welches den zu erzeugenden Gräben 17 und Graten 18 entspricht. Dieses Profil ist mit einem Sägezahnprofil 29 vergleichbar.

In Figur 5 ist ein Verfahren in mehreren Schritten dargestellt, bei dem eine zu erzeugende Schicht 30 aus drei Lagen 31a, 31b, 31c besteht. Die einzelnen Stadien der Beschichtung des Substrates 11 sind mit Bruchlinien 32 voneinander getrennt und die Stadien mit römischen Ziffern bezeichnet. Diese werden im Folgenden kurz erläutert.
I Das Substrat 11 wird zur Verfügung gestellt.
II Die Oberfläche 14 des Substrates 11 wird strukturiert. Es entstehen, wie in Figur 1 angedeutet, Gräben 17 und Grate 18. Dies gilt auch für die folgenden Strukturierungsschritte IV und VI.
III Die erste Lage 31a wird hergestellt und stellt für den folgenden Beschichtungsschritt die Oberfläche 14a zur Verfügung. Es ist auch zu erkennen, dass hierbei die Strukturierung der Oberfläche 14 sich verändert, wobei hierbei gleichzeitig eine Verkrallung der gespritzten Partikel (in Figur 5 nicht mehr zu erkennen) mit der Oberfläche 14 erfolgt. Dies gilt auch für die Schritte V und VII.
VI Die Oberfläche 14a wird wieder oberflächenstrukturiert (analog zum Schritt II).
V Die nächste Lage 31b wird aufgetragen. Hierbei kann es sich um das gleiche Schichtmaterial handeln, welches im Schritt III aufgetragen wurde oder es wird eine Multilayerschicht hergestellt, indem ein anderes Schichtmaterial aufgetragen wird.
VI Die durch den Schritt V entstandene Oberfläche 14b wird wieder oberflächenstrukturiert.
VII Die letzte Lage 31c der Schicht 30 wird aufgetragen und bildet die abschließende Oberfläche 14c des beschichteten Bauteils.

Der Figur 6 lässt sich entnehmen, wie die erfindungsgemäße Maßnahme einer Oberflächenbehandlung vor der Beschichtung das Spritzwinkelintervall beeinflusst. Wie bereits zu Figur 4 erläutert, wird das Spritzwinkelintervall durch den Kegel 27 gebildet. Innerhalb des Kegels liegen die zulässigen Spritzwinkel bzw. der Partikelstrahl, der in Figur 6 nicht näher dargestellt ist.

In Figur 6 ist der Kegel 27 teilweise gestrichelt dargestellt. Diese Form des Kegels ergibt sich nach den Stand der Technik bei einer unbehandelten Oberfläche. Allerdings lässt sich Figur 6 auch entnehmen, dass der modifizierte Kegel nicht kegelförmig ist, sondern von der gestrichelt eingezeichneten Kegelgestalt abweicht. Es gibt wegen des Neigungswinkels β (vgl. Figur 1, in Figur 6 nicht eingezeichnet) nämlich eine Vorzugsorientierung für das Spritzwinkelintervall. In Richtung des Neigungswinkels entsteht eine nasenartige Ausbuchtung. Dies bedeutet, dass in dieser Richtung sehr viel größere Spritzwinkel α (vgl. Figur 1, in Figur 6 nicht eingezeichnet) möglich sind. Gegenüberliegend führt dies jedoch zu einer Abflachung 34 des Kegels, da in dieser Richtung nur noch kleinere Spritzwinkel realisiert werden können. Die Darstellung gemäß Figur 6 macht also deutlich, dass in Abhängigkeit von der gewünschten Spritzgeometrie die Strukturierung gezielt auf die Oberfläche 14 aufgebracht werden muss. Es wird auch deutlich, dass bei einer Abweichung von der Vorzugsorientierung um den Winkel γ (vgl. Figur 2) immer noch von einem vergrößerten Spritzwinkelintervall profitiert werden kann, wenn auch der Effekt nicht so stark ausgeprägt ist.

## Patentansprüche

1. Verfahren zum Beschichten durch thermisches Spritzen, bei dem ein Partikelstrahl (13) auf ein zu beschichtendes Substrat (11) gerichtet wird und die Partikel des Partikelstrahls (13) auf dem Substrat (11) abgeschieden werden, wobei die Achse des Partikelstrahls (13) zur Oberflächennormalen des unbehandelten Substrates (11) unter Ausbildung eines Spritzwinkels (α) geneigt verläuft, wobei
• vor dem thermischen Spritzen eine Vorbehandlung des Substrates (11) durchgeführt wird, bei der die Oberfläche strukturiert wird, und
• Strukturelemente (17, 18, 22, 24) der strukturierten Oberfläche derart schräg auf der Oberfläche hergestellt werden, dass die Strukturelemente (17, 18, 22, 24) der geneigten Achse des Partikelstahls (13) beim thermischen Spritzen zugewandt sind,
**dadurch gekennzeichet,** dass
• als thermisches Spritzen ein Kaltgasspritzen angewendet wird und
• die räumliche Ausdehnung der Strukturelemente (17, 18, 22, 24) zumindest in der Ebene des Spritzwinkels (α) kleiner als der mittlere Durchmesser der Partikel ist.

2. Verfahren nach Anspruch 1,
**dadurch gekennzeichnet,**
**dass** der Neigungswinkel (β) der schrägen Ausrichtung der Strukturelemente dem Spritzwinkel (α) im Wesentlichen entspricht.

3. Verfahren nach einem der vorangehenden Ansprüche,
**dadurch gekennzeichnet,**
**dass** die Ebene des Spritzwinkels (α) und die Ebene der Neigungswinkel (β) der schrägen Ausrichtungen der Strukturelemente in einem Winkel (γ) von höchstens 25° zueinander liegen.

4. Verfahren nach einem der vorangehenden Ansprüche,
**dadurch gekennzeichnet,**
**dass** als Strukturelemente Gräben (17) hergestellt werden.

5. Verfahren nach Anspruch 4,
**dadurch gekennzeichnet,**
**dass** die Gräben (17) Symmetrieebenen (19) aufweisen, die bei der Herstellung derart schräg ausgerichtet werden, dass sie der geneigten Achse des Partikelstahls (13) beim thermischen Spritzen zugewandt sind.

6. Verfahren nach einem der Ansprüche 1 bis 3,
**dadurch gekennzeichnet,**
**dass** die Strukturelemente als Löcher (22) hergestellt werden.

7. Verfahren nach Anspruch 6,
**dadurch gekennzeichnet,**
**dass** die Löcher (22) Symmetrieachsen (23) aufweisen, die bei der Herstellung derart schräg ausgerichtet werden, dass sie der geneigten Achse des Partikelstahls (13) beim thermischen Spritzen zugewandt sind.

8. Verfahren nach einem der vorangehenden Ansprüche,
**dadurch gekennzeichnet,**
**dass**
• das Substrat (11) eine Region (28) aufweist, die für den Partkielsstrahl unter Beachtung der maximal zulässigen Spritzwinkel beim unbehandelten Substrat unzugänglich ist, und dass
• die Strukturelemente (17, 18, 22, 24) in dieser Region (28) derart hergestellt werden, dass eine damit verbundene Vergrößerung des maximal zulässigen Spritzwinkels α dazu führt, dass die Region (28) mit dem thermischen Spritzverfahren beschichtet werden kann.

9. Verfahren nach einem der vorangehenden Ansprüche,
**dadurch gekennzeichnet,**
**dass** die Strukturelemente (17, 18, 22, 24) mit einem Laserstrahl (16), durch ein Erodierverfahren, spanabhebend, durch ein Umformverfahren oder chemisch erzeugt werden.

10. Verfahren nach einem der vorangehenden Ansprüche,
**dadurch gekennzeichnet,**
**dass** das Beschichten durch mehrmaliges abwechselndes Herstellen von Strukturelementen (17, 18, 22, 24) und Herstellen von Lagen (31a, 31b, 31c) der gewünschten Beschichtung erfolgt.

11. Verfahren nach einem der vorangehenden Ansprüche,
**dadurch gekennzeichnet,**
**dass** als Substrat ein Schaufeldrilling (25) einer Strömungskraftmaschine, insbesondere einer Gasturbine beschichtet wird.

## Claims

1. Method for coating by thermal spraying, in which a particle jet (13) is directed onto a substrate (11) to be coated and the particles of the particle jet (13) are deposited onto the substrate (11), wherein the axis of the particle jet (13) runs inclined to the surface normal of the untreated substrate (11) forming a spray angle (α), wherein,
• prior to the thermal spraying, the substrate (11) undergoes pretreatment in which the surface is structured, and
• structure elements (17, 18, 22, 24) of the structured surface are produced obliquely on the surface such that the structure elements (17, 18, 22, 24) are oriented towards the inclined axis of the particle jet (13) during the thermal spraying,
**characterized in that**
• a cold gas spraying is used as thermal spraying and
• the spatial extent of the structure elements (17, 18, 22, 24) is smaller, at least in the plane of the spray angle (α), than the average diameter of the particles.

2. Method according to Claim 1,
**characterized in that**
the angle of inclination (β) of the oblique orientation of the structure elements largely corresponds to the spray angle (α).

3. Method according to either of the preceding claims, **characterized in that**
the plane of the spray angle (α) and the plane of the angle of inclination (β) of the oblique orientations of the structure elements are at an angle (γ) of at most 25° to one another.

4. Method according to one of the preceding claims,
**characterized in that**
trenches (17) are produced as structure elements.

5. Method according to Claim 4,
**characterized in that**
the trenches (17) have planes of symmetry (19) which are oriented obliquely during production such that they are oriented towards the inclined axis of the particle jet (13) during the thermal spraying.

6. Method according to one of Claims 1 to 3,
**characterized in that**
the structure elements are produced as holes (22).

7. Method according to Claim 6,
**characterized in that**
the holes (22) have axes of symmetry (23) which are oriented obliquely during production such that they are oriented towards the inclined axis of the particle jet (13) during the thermal spraying.

8. Method according to one of the preceding claims,
**characterized in that**
• the substrate (11) has a region (28) which is inaccessible to the particle jet while observing the maximum permissible spray angle in the case of the untreated substrate, and **in that**
• in this region (28) the structure elements (17, 18, 22, 24) are produced such that an increase, connected thereto, of the maximum permissible spray angle (α) results in the region (28) being able to be coated with the thermal spraying method.

9. Method according to one of the preceding claims,
**characterized in that**
the structure elements (17, 18, 22, 24) are generated with a laser beam (16), by means of an erosion method, by chip removal, by means of a shaping method or chemically.

10. Method according to one of the preceding claims,
**characterized in that**
the coating is effected by alternating multiple times between production of structure elements (17, 18, 22, 24) and production of layers (31a, 31b, 31c) of the desired coating.

11. Method according to one of the preceding claims,
**characterized in that**
the coated substrate is a blade drilling (25) of a turbomachine, in particular a gas turbine.

## Revendications

1. Procédé de revêtement par pulvérisation thermique, dans lequel on dirige un faisceau (13) de particules sur un substrat (11) à revêtir et on dépose les particules du faisceau (13) de particules sur le substrat (11), dans lequel l'axe du faisceau (13) de particules est incliné par rapport à la normale à la surface du substrat (11) non-traité avec formation d'un angle (α) de pulvérisation, dans lequel
• on effectue, avant la pulvérisation thermique, un traitement préalable du substrat (11), dans lequel on structure la surface et
• on produit des éléments (17, 18, 22, 24) de structure de la surface structurée, de manière inclinée sur la surface de façon à ce que les éléments (17, 18, 22, 24) de structure soient tournés, lors de la pulvérisation thermique, vers l'axe incliné du faisceau (13) de particules,
**caractérisé en ce que**
• on applique, comme pulvérisation thermique, une pulvérisation à gaz froid et
• l'étendue dans l'espace des éléments (17, 18, 22, 24) de structure, au moins dans le plan de l'angle (α) de pulvérisation, est plus petite que le diamètre moyen des particules.

2. Procédé suivant la revendication 1,
**caractérisé**
**en ce que** l'angle (β) d'inclinaison de l'orientation inclinée des éléments de structure correspond sensiblement à l'angle (α) de pulvérisation.

3. Procédé suivant l'une des revendications précédentes,
**caractérisé**
**en ce que** le plan de l'angle (α) de pulvérisation et le plan de l'angle (β) d'inclinaison des orientations inclinées des éléments de structure font entre eux un angle (γ) de 25° au plus.

4. Procédé suivant l'une des revendications précédentes,
**caractérisé**
**en ce que** l'on produit des sillons (17) comme éléments de structure.

5. Procédé suivant la revendication 4,
**caractérisé**
**en ce que** les sillons (17) ont des plans (19) de symétrie, qui sont dirigés de manière inclinée lors de la production, de façon à ce qu'ils soient tournés à la pulvérisation thermique vers l'axe incliné du faisceau (13) de particules.

6. Procédé suivant l'une des revendications 1 à 3,
**caractérisé**
**en ce que** l'on produit les éléments de structure sous la forme de trous (22).

7. Procédé suivant la revendication 6,
**caractérisé**
**en ce que** les trous (22) ont des axes (23) de symétrie, qui, à la production, sont dirigés de manière inclinée, de manière à ce qu'ils soient tournés à la pulvérisation thermique vers l'axe incliné du faisceau (13) de particules.

8. Procédé suivant l'une des revendications précédentes,
**caractérisé**
**en ce que**
• le substrat (11) a une région (28), qui est inaccessible, alors que le substrat est non-traité, au faisceau de particules en prenant en compte l'angle de pulvérisation admissible au maximum et **en ce que**
• on produit les éléments (17, 18, 22, 24) de structure dans cette région (28) de manière à ce qu'un agrandissement, que cela emporte de l'angle (α) de pulvérisation admissible au maximum, fasse que la région (28) puisse être revêtue par le procédé de pulvérisation thermique.

9. Procédé suivant l'une des revendications précédentes,
**caractérisé**
**en ce que** l'on produit des éléments (17, 18, 22, 24) de structure par un faisceau (16) laser par un procédé d'érosion avec enlèvement de copeaux, par un procédé de déformation chimiquement.

10. Procédé suivant l'une des revendications précédentes,
**caractérisé**
**en ce que** le revêtement s'effectue par production alternée plusieurs fois d'éléments (17, 18, 22, 24) de structure et production de couches (31a, 31b, 31c) du revêtement souhaité.

11. Procédé suivant l'une des revendications précédentes,
**caractérisé**
**en ce que** l'on revêt comme substrat un drilling (25) d'aube d'une turbomachine, notamment d'une turbine à gaz.
